# EUROPEAN PATENT APPLICATION

(11) **EP 1 809 030 A2**
(43) Date of publication of application: **18.07.2007**
(21) Application number: 06020044.1
(22) Date of filing: 25.09.2006
(51) Int. Cl.: H04N 5/445

(54) **Parallel television based media interaction system**

(30) Priority: 17.01.2006 US 759315 P; 18.05.2006 US 419146
(71) Applicant: Broadcom Corporation, Irvine, CA 92617 (US)
(72) Inventor: Bennett, James D., 11000 Prague (CZ); Karaoguz, Jeyhan, Irvine, CA 92606 (US)
(74) Representative: Jehle, Volker Armin

(57) **Abstract**

A control device for interacting with a television system that displays media information. The control device is adapted to cause a change in an audio and/or a video portion of the media information on receiving an input from a user. The control device may further, for example, be adapted to govern actions of elements selected from the media information. At least one module is adapted to receive a movement selection from the user. The at least one module may also be adapted to send a control signal directing application of a movement corresponding to the movement selection to an element from the media information. The at least one module may further be adapted to display supplemental media information that guides the user to enter the movement selection. The control device may, for example, be adapted to interact with the Internet, which may provide audiovisual streams to the television system.

## Description

### [CROSS-REFERENCE TO RELATED APPLICATIONS/INCORPORATION BY REFERENCE]

The present application is related to and claims priority from U.S. Provisional Patent Application serial number 60/759,315, with attorney docket number 16876US01, filed January 17, 2006, and titled "PARALLEL TELEVISION BASED MEDIA INTERACTION," the contents of which are hereby incorporated herein by reference in their entirety.

The present application is related to U.S. Patent Application serial number 11/290,974, filed Nov. 30, 2005, titled "PARALLEL TELEVISION REMOTE CONTROL," U.S. Patent Application serial number 11/290,297, filed Nov. 30, 2005, titled "CONTROL DEVICE WITH LANGUAGE SELECTIVITY," U.S. Patent Application serial number 11/289,971, filed Nov. 30, 2005, titled "PHONE BASED TELEVISION REMOTE CONTROL," U.S. Patent Application serial number 11/289,848, filed Nov. 30, 2005, titled "PARALLEL TELEVISION DOCKING ADAPTER, U.S. Patent Application serial number 11/290,079, filed Nov. 30, 2005, titled "UNIVERSAL PARALLEL TELEVISION REMOTE CONTROL," U.S. Patent Application serial number / , , with attorney docket number 16870US02, filed concurrently herewith, titled "PARALLEL TELEVISION BASED MEDIA RECORDING," U.S. Patent Application serial number / / , with attorney docket number 16872US02, filed concurrently herewith, titled "LAPTOP BASED TELEVISION REMOTE CONTROL," and U.S. Patent Application serial number / , , with attorney docket number 16873US02, filed concurrently herewith, titled "PARALLEL TELEVISION BASED VIDEO SEARCHING," each of which are hereby incorporated herein by reference in their entirety.

### [FEDERALLY SPONSORED RESEARCH OR DEVELOPMENT]

[Not Applicable]

### [SEQUENCE LISTING]

[Not Applicable]

### [MICROFICHE/COPYRIGHT REFERENCE]

[Not Applicable]

### BACKGROUND OF THE INVENTION

### 1. Field of the Invention

Various aspects of present invention relate to controlling display of multimedia information on a multimedia display system.

### 2. Description of the Related Art

A television channel broadcaster generally broadcasts hundreds of channels. A user selects a channel from the hundreds of channels typically using a remote control. The remote control sends a control signal to a television system and the television system displays a selected channel on a television screen. The remote control uses infrared or radio frequency to send the control signal. Infrared transmission generally requires a line of sight between the remote control and the television system, and the typical range of operation is a few meters. Radio frequency transmission does not need the line of sight, but the range of operation is again limited to a few meters.

The user changes audio and display settings of the television system, selects channels, swaps channels, etc., using a typical remote control. The user has merely on-off control over the channel that appears on the television screen.

A video game system has a user control interface that allows a player to interact with a video game. Without it, the video game is a passive medium. The video game system displays the video game currently played by the user on a video display. The video display may typically be the television screen. The television system may also play sound associated with the video game on a speaker of the television system. The video game system typically uses a keyboard, a mouse, a paddle, a joystick, a steering wheel, a light gun, a game pad or a combination of these as the user control interface. The player selects elements or objects from the video game displayed on the video display and maneuvers the selected elements using the user control interface. The user control interface of the video game system may contain a variety of special feature buttons depending on varieties of maneuvers allowed on the selected elements. The player receives visual information from the video display, makes a maneuver choice and presses the buttons of the user control interface to realize the choice. Operating a typical user control interface may be inconvenient, for example, because the player generally looks back and forth between the buttons and the video display to complete a task.

Internet servers, music players, digital cameras, etc. may support streaming media. A portable control device may be used to control the streaming media. Control of streaming media typically includes randomly accessing a segment of the media, playback or play forward, play slow, etc. The control device typically has a set of buttons, and controlling the streaming media generally requires looking back and forth between the set of buttons of the portable control device and a screen on which the streaming media is displayed.

Further limitations and disadvantages of conventional and traditional approaches will become apparent to one of ordinary skill in the art through comparison of such systems with various aspects of the present invention.

### BRIEF SUMMARY OF THE INVENTION

A control device that interacts with a television system and/or media source, substantially as shown in and/or described in connection with at least one of the figures, as set forth more completely in the claims.

According to an aspect of the invention, a home entertainment system is provided that receives video information from a plurality of video sources, the home entertainment system comprising:
a television comprising a first screen that displays video information received from at least one of the plurality of video sources; and
a remote control device comprising a second screen that displays supplemental video information corresponding to the video information displayed on the first screen.

Advantageously, the remote control device further comprises a user input interface adapted to receive a video selection, and the displayed video information corresponds to the video selection.

Advantageously:
the user input interface of the remote control device is adapted to receive a user selection; and
the remote control device is adapted to, in response to the user selection, send a control signal triggering an alteration in the video information and directing display of the altered video information on the first screen.

Advantageously, the user selection is based on the supplemental video information displayed on the second screen.

Advantageously, the user selection causes the display of second video information on the first screen and corresponding second supplemental video information on the second screen.

Advantageously, the user selection causes applying a movement to an element of the video information and subsequent display of the altered video information on the first screen.

Advantageously, the home entertainment system further comprises a set top box that is communicatively coupled to the remote control device, wherein the set top box applies the movement to the element of the video information in response to the control signal from the remote control device.

Advantageously, the home entertainment system further comprises a memory that stores the video information displayed on the first screen.

According to an aspect of the invention, a control device is provided for use with a television having a first video display that displays media information, the control device comprising:
a second video display;
at least one module adapted to display, on the second video display, a list of a plurality of elements of the media information;
a user input interface adapted to receive an element selection, where the element selection identifies an element from the displayed list of the plurality of elements; and
a communication interface;
wherein the at least one module is further adapted to send a control signal via the communication interface, where the control signal is adapted to direct execution of an action by the selected element.

Advantageously, the at least one module is adapted to send the control signal to set top box circuitry.

Advantageously, the at least one module is adapted to receive the list of the plurality of elements from a media source that provides the media information to the television.

Advantageously, the at least one module is adapted to display, on the second video display, a plurality of actions, and the action executed by the selected element is selected from the plurality of actions.

Advantageously, the control device is located at a first premises, and the television is located a second premises.

Advantageously, the media information is adapted for the first video display of the television.

Advantageously, the control device further comprises a speaker, and wherein the at least one module is adapted to play an audio portion of the media information displayed on the television.

According to an aspect of the invention, a control device is provided for interacting with a video source that provides a video stream to a television system, the control device comprising:
a communication interface adapted to receive user interaction information from the video source, where the user interaction information identifies a plurality of actions that may be applied on the video stream;
a user interface adapted to:
   present the user interaction information to a user; and
   receive a user input that identifies an action from the plurality of actions; and
at least one module adapted to transmit a control signal, where the control signal is adapted to trigger application of the identified action on the video stream.

Advantageously, the user interface comprises a plurality of buttons, and the user interaction information comprises a mapping between the plurality of buttons and the plurality of actions.

Advantageously, the user interface is further adapted to receive selection of the video stream from a plurality of video streams available with the video source.

Advantageously, the control device is located at a first premises, and the video source is located at a second premises.

Advantageously, the control device further comprises a memory, and wherein the at least one module is adapted to store, in the memory, the user interaction information received by the communication interface. These and other advantages, aspects and novel features of the present invention, as well as details of illustrative aspects thereof, will be more fully understood from the following description and drawings.

### BRIEF DESCRIPTION OF THE DRAWINGS

For various aspects of the present invention to be easily understood and readily practiced, various embodiments will now be described, for purposes of illustration and not limitation, in conjunction with the following figures:

FIG. 1 is a schematic block diagram illustrating interaction between a control device that remotely controls display of a video on a television screen of a television system, the television system and media sources, in accordance with various aspects of the present invention;

FIG. 2 is a schematic block diagram illustrating an embodiment of the control device of FIG. 1, where the control device interacts with the television screen via a set top box that is housed with the television screen in an entertainment system;

FIG. 3 is a schematic block diagram illustrating an embodiment of the control device of FIG. 2, where the entertainment system comprises a game box and a television;

FIG. 4 is a schematic block diagram illustrating an embodiment of the control device of FIG. 1, further supporting interaction with the media sources via the Internet;

FIG. 5 is a schematic block diagram illustrating an embodiment of the control device of FIG. 4, where the control device interacts with the television screen via a set top box;

FIG. 6 is a schematic block diagram illustrating an embodiment of the control device of FIG. 5, further supporting a dedicated interaction path with the set top box;

FIG. 7 is a schematic block diagram illustrating communication pathways between a multimedia source, an entertainment system, a billing server and a control device that controls display of a selected multimedia element on the entertainment system, in accordance with various aspects of the present invention;

FIG. 8 is a flowchart illustrating a method of performing purchase transaction management by a control device using the control device screen for a video displayed on a television screen, according to one embodiment of the present invention; and

FIG. 9 illustrates an embodiment of the control device of FIG. 7 wherein the control device comprises a touch sensitive screen, the screen displaying user interaction information corresponding to multimedia information displayed on the entertainment system.

### DETAILED DESCRIPTION

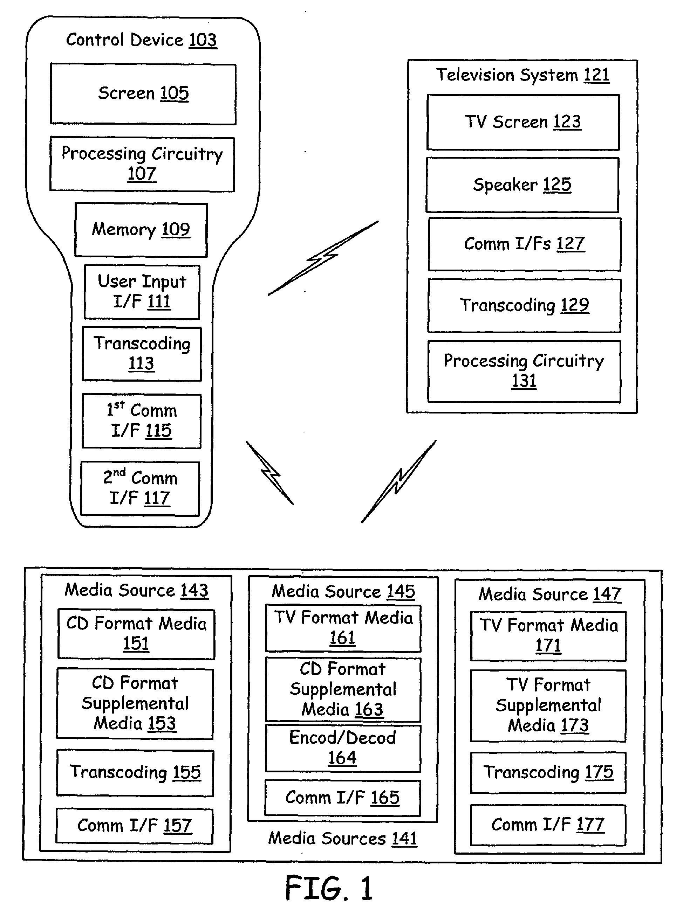

FIG. 1 is a schematic block diagram illustrating interaction between a control device 103 that remotely controls display of a video on a television screen 123 of a television system 121, the television system 121 and media sources 141. The control device 103 has a control device screen 105 (*e.g.,* a video display), processing circuitry 107 (*e.g.,* which may comprise various hardware and/or software modules), a memory 109, a user input interface 111, a first communication interface 115 and a second communication interface 117. The television system 121 has a television screen 123 and communication interfaces 127. The media sources 141 comprise a first media source 143, a second media source 145 and a third media source 147.

The control device 103 is communicatively coupled (e.g., connected) to the television system 121 over a first wireless link and via the first communication interface 115 and to the media sources 141 over a second wireless link and via the second communication interface 117. The first wireless link and the second wireless link may comprise characteristics of any of a variety of communication link types (e.g., infrared, Bluetooth, IEEE 802.11, IEEE 802.15, cellular telephony (e.g., GSM/GPRS/EDGE, CDMA, CDMA2000, UMTS, WCDMA, etc.), UltraWideBand, standard/proprietary, etc.). The control device 103 in another embodiment may be communicatively coupled to the television system 121 and/or the media sources 141 via a wired link. The wired link may, for example, comprise characteristics of one or more of a copper wire, an Ethernet cable and an optical fiber.

The user input interface 111 of the control device 103 receives a selection from a user (e.g., a user input identifying a video selection). The selection identifies a first video stream for the television system 121. The processing circuitry 107 generates and sends a first control signal to the television system 121 via the first communication interface 115. The first control signal directs the television system 121 to receive the first video stream from the media sources 141. The television system 121, in response to the first control signal, receives the first video stream from the media sources 141 via the communication interfaces 127. The television system 121 subsequently displays the first video stream on the television screen 123. The control device 103 receives supplemental video information corresponding to the first video stream from the media sources 141 via the second communication interface 117. The control device 103 then displays the received supplemental video information on the control device screen 105.

The supplemental video information corresponding to the first video stream may generally correspond to information related to the first video stream but not typically presented with the first video stream. A non-limiting example of such supplemental video information may, for example, comprise various types of user interaction information. The user interaction information may, for example, comprise a plurality of functionalities that may be applied to the first video stream. The user interaction information may include a mapping between the plurality of functionalities and the user input interface 111 of the control device 103. For example and without limitation, the user input interface 111 may comprise a plurality of buttons. The processing circuitry 107 may assign each of the plurality of functionalities to a corresponding one of the plurality of buttons. The user input interface 111 of the control device 103 may then be utilized to actuate the plurality of functionalities. The plurality of functionalities may, for example and without limitation, comprise a 'seek' functionality, a 'pause' functionality, a 'play' functionality and a 'play slow' functionality. The processing circuitry 107 of the control device 103 assigns the 'seek' functionality to a first button from the plurality of buttons, the 'pause' functionality to a second button from the plurality of buttons, the 'play' functionality to a third button from the plurality of buttons and the 'play slow' functionality to a fourth button from the plurality of buttons. The user interaction information corresponding to the first video stream is presented to a user via the control device screen 105. The user may actuate any of the plurality of functionalities on the first video stream by entering a selection through the user input interface 111.

Continuing the above-mentioned non-limiting exemplary scenario, if the first button of the user input interface 111 is selected, then the control device 103 seeks a status of the first video stream displayed on the television screen 123 and subsequently displays an indicator on the control device screen 105. The indicator indicates, for example, how much of the first video stream has been already displayed on the television screen 123. A user who interacts visually with the control device screen 105 knows what percentage of the first video stream has been already displayed on the television screen 123 from the indicator. If the second button of the user input interface 111 is selected, then the control device 103 sends a second control signal to the television system 121 directing the television system 121 to display a current frame of the first video stream until further selection. The first video stream comes to a standstill on the television screen 123. On selection of the third button of the user input interface 111, the control device 103 sends a third control signal to the television system 121 directing the television system 121 to display consecutive frames of the first video stream. Consequently, the first video stream appears to move on the television screen 123 again. If the fourth button of the user input interface 111 is selected, then the control device sends a fourth control signal to the television system 121. In response to the fourth control signal, the television system 121 displays consecutive frames of the first video stream on the television screen 123 at a slower rate. The first video stream thus appears to be moving slowly on the television screen 123.

The first video stream may, for example, comprise a plurality of picture frames, which if displayed on the television screen 123 at a rate, appears as a moving video. The memory 109 of the control device 103 may store the user interaction information. A video stream may generally comprise characteristics of any of a variety of selectable units of video information. For example and without limitation, a video stream may comprise characteristics of a video portion of a movie, video portion of a music video, video portion of a television program, a television channel, a sporting or other entertainment event, a video portion of a news report, a computer game or any of a variety of units of recorded video information.

The first video stream may be processed for (*e.g*., specifically adapted for) the television screen 123, and the supplemental video information may be processed for (*e.g*., specifically adapted for) the control device screen 105. Such processing may, for example and without limitation, comprise transcoding, encoding and decoding, and/or various fitting functionalities. Any or all of such functionalities can be employed or disabled in the control device 103, in the television system 121 and in the media sources 141. The control device 103 employs transcoding in block 113, the television system 121 employs transcoding in block 129, the first media source 143 employs transcoding in block 155, and the third media source 147 employs transcoding in block 175.

The first media source 143 of the media sources 141 supports primary video information (*e.g.,* the first video stream) and supplemental video information (*e.g*., the user interaction information corresponding to the first video stream, the indicator that indicates how much of the first video stream has been already displayed on the television screen 123, etc.) in a control device format (*e.g*., QVGA (Quarter Video Graphics Array) format). Transcoding may, for example, be performed on media information to save bandwidth. The second media source 145 of the media sources 141 supports the primary video information in television system format 161 (*i.e.,* a format that is prescribed for the television screen 123, for example, HDTV (High Definition Television) format) and the supplemental video information in the control device format 163. The second media source 145 employs encoding/decoding functionality in block 164. The encoding/decoding functionality may, for example, be advantageous, when the media source handles differently encoded media.

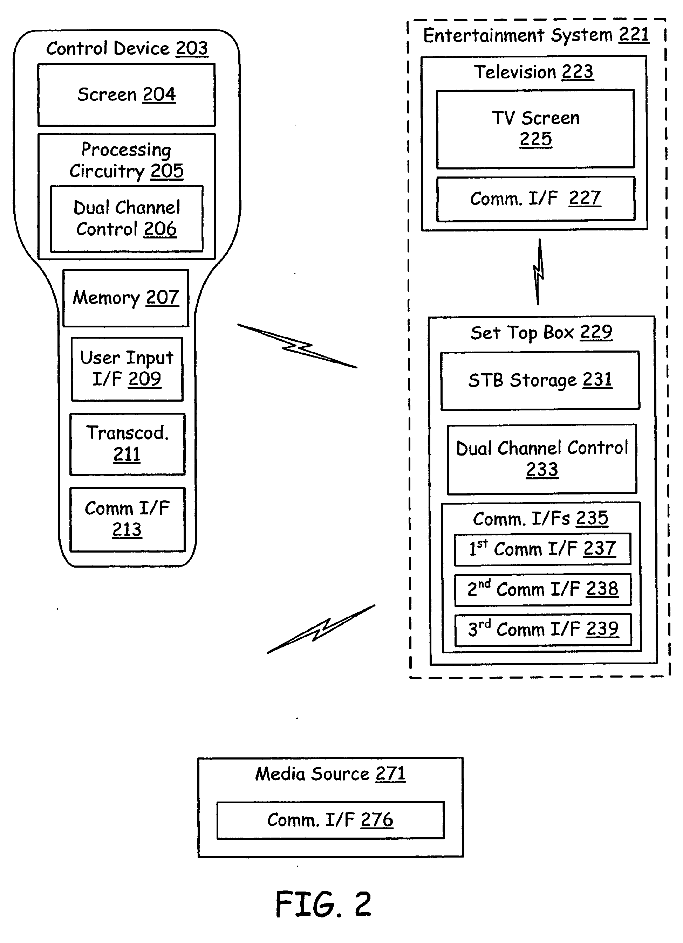

FIG. 2 is a schematic block diagram illustrating an embodiment of the control device 103 of FIG. 1 where the control device 203 interacts with the television screen 225 via a set top box 229 that is housed with the television screen 225 in an entertainment system 221. The control device 203 interacts with the set top box 229 using a communication interface 213 of the control device 203. The set top box 229 is communicatively coupled to the control device 203, a television 223 and a media source 271 via a first communication interface 237, a second communication interface 238 and a third communication interface 239, respectively. The communication link between the control device 203 and the set top box 229 may, for example, comprise characteristics of one or more of infrared, Bluetooth, IEEE 802.11, IEEE 802.15, cellular telephony (*e.g.*, GSM/GPRS/EDGE, CDMA, CDMA2000, UMTS, WCDMA, etc.), UltraWideBand or any standard/proprietary connection. The communication link between the set top box 229 and the television 223 is shown to be a wireless link. This communication link may alternatively, for example, be a tethered fiber optic or a coaxial cable.

The media source 271 and the entertainment system 221 may be located at the same premises. In another embodiment, the media source 271 is located at a first premises, and the entertainment system 221 is located at a second premises. The entertainment system 221 and the media source 271 interact with each other. For example, the set top box 229 and the media source 271 may interact with each other using one or more of infrared, Bluetooth, IEEE 802.11, IEEE 802.15, cellular telephony (e.g., GSM/GPRS/EDGE, CDMA, CDMA2000, UMTS, WCDMA, etc.), UltraWideBand, satellite and landline telephony techniques.

The user input interface 209 of the control device 203 may comprise one or more of a plurality of buttons, a joystick, a touchpad, a pen, a thumbwheel and a mouse. For example and without limitation, the user input interface 209 of the control device 203 may comprise a plurality of buttons. In this non-limiting example, the media source 271 comprises a plurality of media elements, which are numbered. A media element may generally comprise characteristics of any of a variety of selectable units of media information (*e.g.*, multimedia information). For example and without limitation, a media element may comprise characteristics of a movie, a music video, a television program, a television channel, a sporting or other entertainment event, a news report, a computer game or any of a variety of units of recorded or live multimedia information. If the media source 271 is a television channel broadcaster, then the plurality of media elements may comprise a plurality of television programs, which, in various scenarios might also be called channels. If the media source 271 is a DVD (Digital Video Disk), then the plurality of media elements may comprise a plurality of media (audio and/or video) tracks of the DVD. If the media source 271 is a video game box, then the plurality of media elements may comprise a plurality of video games.

Some of the plurality of buttons of the control device 203 may correspond to standard functionalities. The standard functionalities may, for example, include a 'channel up' functionality, a 'swapping' functionality, a 'power off functionality, a 'screen brightness increase' functionality and a 'media guide perusal' functionality. For example, a first button from the plurality of buttons (the user input interface 209) corresponds to the 'channel up' functionality. If a user selects the first button then the processing circuitry 205 of the control device 203 generates a first control signal and sends the first control signal to the set top box 229 via the communication interface 213. The set top box 229 receives the first control signal via the first communication interface 237 of the set top box 229. In response to the first control signal, the set top box 229 receives a next channel from the media source 271 via the third communication interface 239 and forwards the received next channel to the television 223 via the second communication interface 238. The television 223 then displays the next channel on the television screen 225. If the media source. 271 is the DVD, then the next channel may refer to a next media track from the DVD. If the media source 271 is the video game box, then the next channel may refer to a next video game stored in the video game box.

Using the plurality of buttons of the control device 203 the user may enter a selection that corresponds to an interactive media element. The selection may be based on media guide information. The media guide information identifies the plurality of media elements available with the media source 271. The media guide information may be viewed on the control device screen 204 by selecting a second button from the plurality of buttons that correspond to the 'media guide perusal' functionality. In response to the selection from the user, the control device 203 sends a second control signal to the set top box 229 directing the set top box 229 to retrieve the interactive media element and user interaction information corresponding to the interactive media element from the media source 271. The set top box 229 receives the interactive media element from the media source 271 and sends the interactive media element to the television 223 for display on the television screen 225. The set top box 229 receives the user interaction information from the media source 271 and sends the received user interaction information to the control device 203 via the first communication interface 237. The control device 203 receives the user interaction information from the set top box 229 and displays the received user interaction information on the control device screen 204. In one embodiment, the control device 203 stores the user interaction information in memory 207 of the control device 203. The user interaction information displayed on the control device screen 204 guides the user to interact with the interactive media element displayed on the television screen 225.

In this exemplary case, the user interaction information comprises a plurality of actions that the interactive media element responds to. The processing circuitry 205 of the control device 203 maps the plurality of actions to remaining buttons of the plurality of buttons of the control device 203. In this non-limiting example, the plurality of actions may include a 'fast video' action. The processing circuitry 205 maps the 'fast video' functionality to a first of the remaining buttons of the plurality of buttons. If the user selects the first of the remaining buttons of the plurality of buttons, then the control device 203 sends a third control signal to the set top box 229. The video portion of the interactive media element may, for example, comprise a plurality of picture frames, which if displayed on the television screen 225 at a rate, appears as a moving picture, which may also be referred to as a video. The set top box 229 responds to the third control signal by sending the plurality of picture frames to the television 223 at a faster rate. Consequently, the video portion of the interactive media element appears to move at the faster rate. The set top box 229 may store the interactive media element in set top box storage 231 prior to sending the interactive video element to the television 223. The interactive video element may, for example, comprise characteristics of a movie, a music video, a television program, a sporting or other entertainment event, a computer game or any of a variety of units of recorded multimedia information. The interactive media element may comprise live multimedia information. In the case of the live multimedia information, typically the 'fast video' action might not be included in the plurality of actions to which the interactive media element responds (e.g., depending on the current temporal relationship between the displayed multimedia information and the live multimedia information).

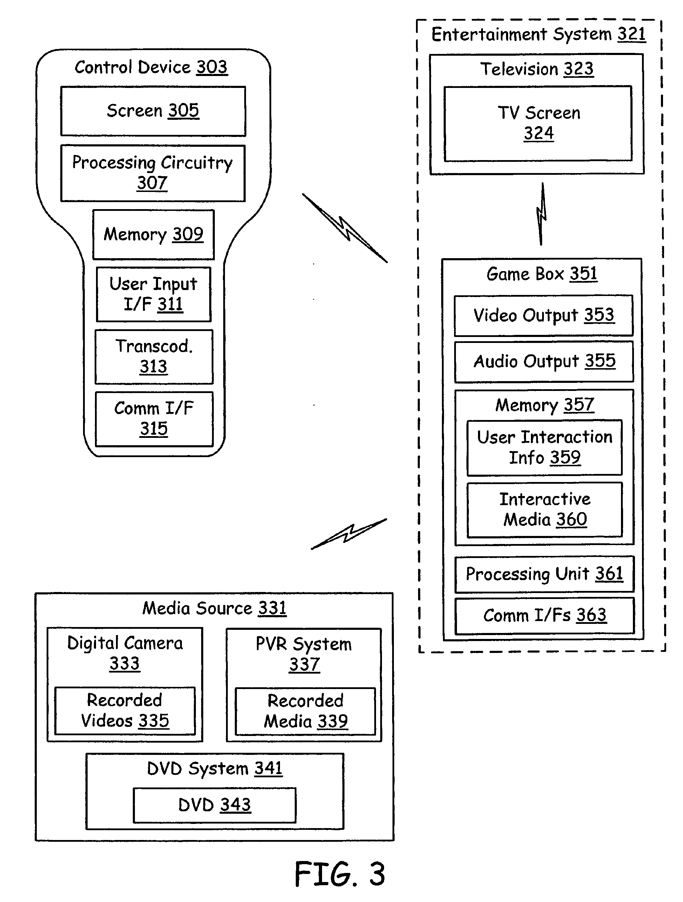

FIG. 3 is a schematic block diagram illustrating an embodiment of the control device 203 of FIG. 2 where the entertainment system 321 comprises a game box 351 and a television 323. The control device 303 comprises a screen 305 (e.g., a video display), a memory 309, a user input interface 311 and a communication interface 315. The control device 303 communicates with the entertainment system 321 via the communication interface 315. The communication interface 315 is shown to be a wireless interface. The communication interface 315, in one embodiment, may be a wired interface that supports communication over an optical fiber link, a coaxial cable, etc. The game box 351 comprises a memory 357, a processing unit 361 and communication interfaces 363. The game box 351 provides a video output 353 and an audio output 355. The game box 351 is communicatively coupled to the control device 303, the television 323 and media source 331 via communication interfaces 363 of the game box 351. The control device 303 interacts with the media source 331 and the television 323 via the game box 351. Communication between the television 323 and the media source 331 occurs via the game box 351.

The media source 331 may be, for example and without limitation, a digital camera 333, a PVR system 337 or a DVD system 341. The media source 331 stores a plurality of elements of interactive media information. The elements of interactive media information may, for example, comprise characteristics of a movie, a music video, a television program, a sporting or other entertainment event, a computer game or any of a variety of units of recorded multimedia information. If the digital camera 333 provides a plurality of elements interactive media information to the game box 351, then the plurality of elements of interactive media information may refer to a plurality of recorded videos 335 stored in the digital camera 333. The plurality of recorded videos 335 may typically be a recorded sporting or other entertainment event. If the PVR system 337 provides the plurality of elements of interactive media information to the game box 351, then the plurality of elements of interactive media information may refer to a plurality of recorded elements of media information 339 stored in the PVR system 337. The recorded elements of media information 339 stored in the PVR system 337 may typically be recorded television programs. If the DVD system 341 provides the plurality of elements of interactive media information to the game box 351, then the plurality of elements of interactive media information may refer to a plurality of multimedia tracks stored in a DVD 343. The DVD 343 may, for example, comprise a multimedia game.

Each of the plurality of elements of interactive media information provided by the media source 331 may have an audio portion, a video portion and corresponding user interaction information (e.g., supplemental media information). The user interaction information typically reveals how a user may control and/or maneuver the audio portion and the video portion of the interactive media information using the user input interface 311 of the control device 303. The user may be allowed to select at least one element from interactive media information and apply a plurality of actions on the selected element. The plurality of actions may, for example, include a 'move right' action, a 'move left' action, a 'jump' action and a 'run' action. The user input interface 311 of the control device 303 may comprise a plurality of buttons. In such a case, the user interaction information comprises a mapping between the plurality of buttons and the plurality of actions. The control device screen 305 may be a touch sensitive screen. In this case, the control device screen 305 may be used as the user input interface of the control device 303, and the user interaction information may comprise an image representation of the plurality of actions. The image, when displayed on the control device screen 305 and/or on a television screen 324, reveals all permissible user interactions with the interactive media information. In some embodiments, the same user interaction information may correspond to all of the plurality of elements of interactive media information.

For example and without limitation, the game box 351 is communicatively coupled to the DVD system 341, and the DVD 343 comprises a plurality of multimedia games (an exemplary plurality of elements of interactive media information). The user input interface 311 of the control device 303 receives a media selection. The media selection identifies a multimedia game (an exemplary element of interactive media information) from the plurality of multimedia games stored in the DVD 343. The media selection may be based on media guide information displayed on the control device screen 305 and/or the television screen 324. The media guide information identifies the plurality of elements of interactive media information stored in the DVD 343. The control device 303 sends a first control signal to the game box 351 directing the game box 351 to retrieve the multimedia game from the DVD 343. The game box 351 receives the multimedia game 360 and corresponding user interaction information 359 from the DVD system 341. The communication link between the game box 351 and the DVD system 341 is shown to be a wireless link. In yet another embodiment, the communication link may be a wired link. The game box 351 may be located at a first premises, and the DVD system 341 may be located at a second premises. The game box 351 stores the received multimedia game 360 in a memory 357 of the game box 351 and sends a second copy of the multimedia game 360 to the television 323. The television 323 displays a video portion of the multimedia game 360 on the television screen 324 and plays an audio portion of the multimedia game 360 on a speaker of the television 323. The game box 351 also sends the corresponding user interaction information 359 (supplemental media information) to the control device 303. The game box 351 may in addition store a second copy of the user interaction information 359 in the memory 357 of the game box 351.

The control device 303 displays the user interaction information 359 on the control device screen 305. The user input interface 311 comprises a plurality of buttons. Processing circuitry 307 of the control device 303, for example, maps a first of the plurality of buttons to the 'move right' action and a second of the plurality of buttons to the 'move left' action. The multimedia game 360 comprises a game element. For example, the multimedia game 360 may be a wrestling competition between two persons. The game element is a first one of the two persons. The control device 303 receives a selection of the first of the plurality of buttons from the user, also called player. The control device 303 sends a second control signal to the game box 351 directing the game box 351 to move the game element (the first one of the two persons) to the right by a predefined step. The processing unit 361 of the game box 351 moves the game element (the first one of the two persons) to the right by the predefined step. The game box 351 sends the modified video output 353 (the multimedia game 360 with the first one of the two persons moved to the right) to the television 323 for display on the television screen 324.

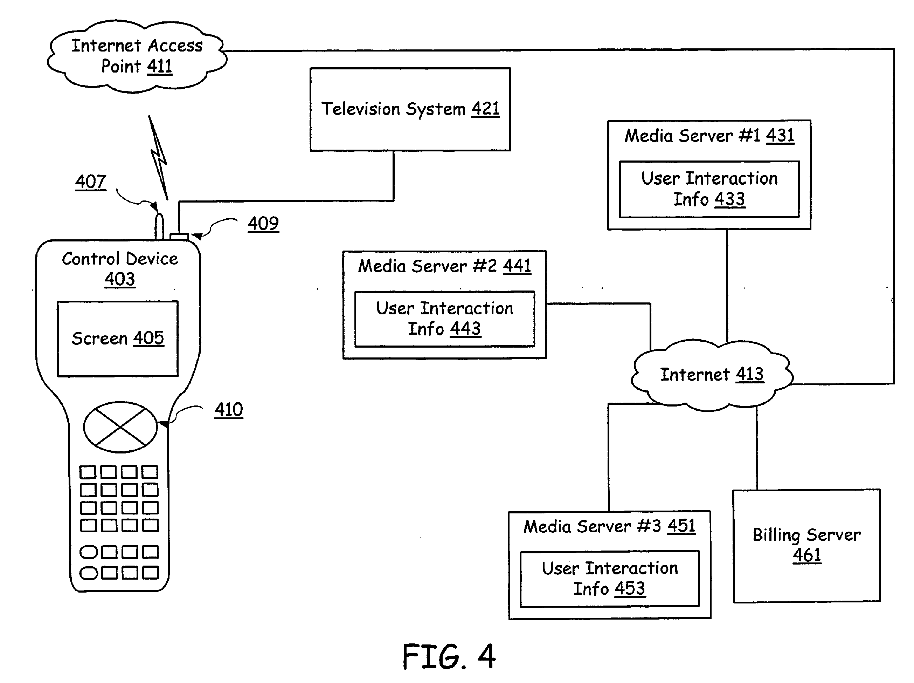

FIG. 4 is a schematic block diagram illustrating an embodiment of the control device 103 of FIG. 1 further supporting interaction with the media sources via the Internet 413. The media sources comprise a first media server 431, a second media server 441 and a third media server 451. The first media server 431, the second media server 441 and the third media server 451 are communicatively coupled to the Internet 413. The first media server 431, the second media server 441 and the third media server 451, respectively, store first user interaction information 433, second user interaction information 443 and third user interaction information 453. The first media server 431, the second media server 441 and the third media server 451 also store a first plurality of media elements, a second plurality of media elements and a third plurality of media elements, respectively. The first plurality of media elements comprise interactive and non-interactive media elements. The first user interaction information 433 reveals how a user may control and change the interactive media elements stored in the first media server 431.

The media sources (e.g., the first 431, the second 441 and the third media server 451) may be, for example and without limitation, one or more of an Internet server, an Intranet server, a movie server, etc. The control device 403 is identified by a first IP (Internet Protocol) address. The control device 403 is adapted to communicate to any device having a different IP address. The control device 403 is communicatively coupled to an Internet access point 411 via a wireless link. The communication link between the control device 403 and the Internet access point 411 may alternately be a wired link. The wireless link may, for example, be one or more of a Bluetooth link, an IEEE 802.11 link and an IEEE 802.15 link. The wired link may, for example, be one or more of an optical fiber link, a coaxial cable link and an Ethernet link. The control device 403 interacts with the Internet 413 via the Internet access point 411 and a wireless communication interface 407. The control device 403 comprises a wired communication interface 409 via which the control device 403 is communicatively coupled to a television system 421. The control device has a screen 405 (e.g., a video display). The control device 403 has a plurality of buttons 410 with which the user enters a variety of selections. The plurality of buttons 410 comprises a first plurality of buttons that enable the user to control selection, delivery and display of the first plurality of media elements, the second plurality of media elements and the third plurality of media elements on a screen of the television system 421 and/or on the control device screen 405. The plurality of buttons 410 comprises a second plurality of buttons. The control device 403 adapts itself using the first user interaction information 433 so that the second plurality of buttons may be used by the user to interact with the interactive media elements stored in the first media server 431. Similarly, the control device 403 adapts itself using the second user interaction information 443 and the third user interaction information 453 to enable the user to interact with interactive media elements stored in the second media server 441 and in the third media server 451, respectively.

The first plurality of media elements, the second plurality of media elements and the third plurality of media elements may be, for example, a combination of stored movies, personal videos, television programs, music videos, video portions of television programs and multimedia games. For example and without limitation, the first media server 431 may be an online music store. The first plurality of media elements may refer to a plurality of music audios and music videos available with the online music store 431. In this non-limiting example, the control device 403 receives a media selection. The user enters the media selection using one or more of the first plurality of buttons. The media selection identifies a music video (an exemplary media element) that is available with the online music store 431. The control device 403 sends a first control signal to the online music store 431 via the wireless communication interface 407 and the Internet access point 411. The first control signal seeks access to the selected music video from the online music store 431. The online music store 431 has a second IP address.

For example and without limitation, the selected music video may be a pay video. A billing server 461 having a third IP address is communicatively coupled to the Internet 413. The online music store 431, using the Internet 413, informs the billing server 461 that the control device 403 is attempting an access to the pay video. Subsequently, the control device 403 receives supplemental media information via the Internet 413 and displays the supplemental media information on the control device screen 405. The supplemental media information guides the user to enter a plurality of choices via the plurality of buttons of the control device 403. The plurality of choices entered by the user enable the billing server 461 and the online music store 431 to verify credentials of the user and to sell media rights of the selected music video to the user. Typical supplemental media information displayed on the control device screen 405 may be a data sheet where the user is prompted to enter a username, a password, an identity of the control device 403 and credit card details. The control device 403 sends the plurality of choices entered by the user to the billing server 461 and/or the online music store 431 using the Internet 413. The billing server 461 and/or the online music store 431 receives the plurality of choices entered by the user and verifies credentials of the user using the plurality of choices. If the media rights purchasing steps are conducted successfully via user interaction, then the online music store 431 grants media rights of the selected music video to the user. The control device 403 subsequently receives the selected music video from the online music store 431 via the Internet 413 and the wireless communication interface 407. The control device 403 forwards the music video to the television system 421 via the wired communication interface 409. The television system 421 displays a video portion of the music video on a television screen and plays an audio portion of the music video on a television speaker.

The selected music video may, for example, be a free-to-view video. In such a case, the user might be prompted to go through credential verification steps only. The control device 403 receives second supplemental media information via the Internet 413 and the wireless communication interface 407. The control device 403 displays the second supplemental media information on the control device screen 405. Typical second supplemental media information may be a list of a plurality of manufacturer identities. The control device screen 405 may be a touch sensitive screen. The user selects a manufacturer identity corresponding to the manufacturer of the control device 403 from the plurality of manufacturer identities displayed on the control device screen 405 and enters a selection using the touch screen 405. The control device 403 sends the user selection to the online music store 431 via the Internet 413. The online music store 431 receives the user selection and responds to the user selection by sending the selected music video to the control device via the Internet 413.

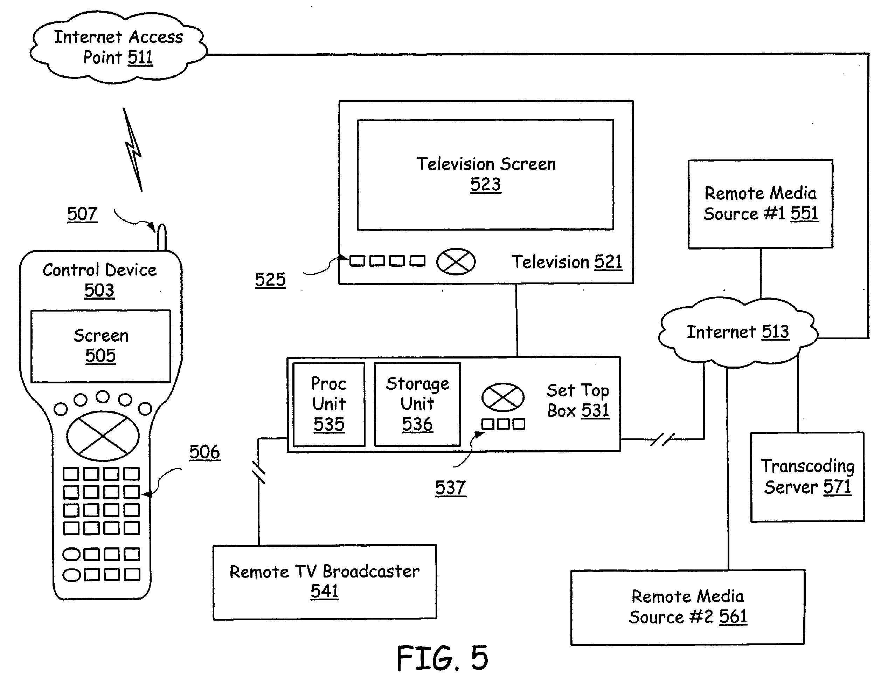

FIG. 5 is a schematic block diagram illustrating an embodiment of the control device 403 of FIG. 4, where the control device 503 interacts with the television screen 523 via a set top box 531. A television 521 comprises a first plurality of buttons 525 with which a user may control display and audio settings of the television 521. The television 521 is communicatively coupled to the set top box 531. The set top box 531 comprises a second plurality of buttons 537. The user may use the second plurality of buttons 537 to modify the display and audio settings of the television 521. The control device 503 comprises a third plurality of buttons 506 with which the user may control the display and audio settings of the television 521. The control device 503 controls delivery of media (*e.g.*, multimedia information and/or video information) from a first remote media source 551, a second remote media source 561 and a remote television broadcaster 541 to the television 521 via the set top box 531. The control device 503 is communicatively coupled to the set top box 531 via the Internet 513. The set top box 531 is again communicatively coupled to the first remote media source 551 and the second remote media source 561 via the Internet 513.

The remote television broadcaster 541 in the figure is shown to be coupled to the set top box 531 via a wired link, which may typically be an optical fiber link or a coaxial cable link. In one embodiment, the communication coupling between the set top box 531 and the remote television broadcaster 541 may be a wireless link, that may typically be, without limitation, a satellite link, a radio frequency link, any of a variety of cellular link or a Bluetooth link. The set top box 531 is located at a first premises, and the remote television broadcaster 541 is located at a second premises. Media broadcast by the remote television broadcaster 541 is a plurality of television programs. The first remote media source 551 and the second remote media source 561 may, for example, be one or more of a movie repository, a music store, a DVD, a CD, a video camera, a video game server, etc. The first remote media source 551 is located at a third premises, and the second remote media source 561 is located at a fourth premises. The control device 503 may be located at any one of the first premises, the second premises, the third premises and the fourth premises. The control device 503 may alternately be located at a fifth premises.

The control device 503 comprises a control device screen 505. The control device 503 has a first IP address, and the set top box 531 has a second IP address. Any device coupled to the Internet 513 identifies the control device 503 and the set top box 531 by using the first IP address and the second IP address, respectively. Each of media sources (551 or 561) interacting with the Internet 513 has a separate IP address.

The control device 503 receives a first user input via the third plurality of buttons 506. The first user input identifies a media guide perusal request. The control device 503 sends a first control signal via the wireless interface 507 to the Internet 513. In response to the first control signal, the first media source 551 and the second media source 561 send a first media guide and a second media guide, respectively, to the control device 503 via the Internet 513. Additionally, the set top box 531 retrieves a third media guide from the remote television broadcaster 541 and forwards the third media guide to the control device 503 via the Internet 513. The first media guide, the second media guide and the third media guide identify a plurality of media elements available with the respective media sources. For example and without limitation, the first media source 551 is a video game server. The first media guide identifies a plurality of video games stored in the video game server 551. The control device 503 displays the first, the second and the third media guide on the control device screen 505 for perusal.

Subsequently, the control device 503 may receive a second user input. The second user input identifies a video game from the plurality of video games stored in the video game server 551. The control device 503 sends a second control signal via the Internet 513. In response to the second control signal, the video game server 551 sends the video game to the set top box 531 via the Internet 513. The set top box 531 receives the video game, stores a first copy of the video game in a storage unit 536 and forwards a second copy of the video game to the television 521 for display on the television screen 523.

The control device 503 receives a third user input via the third plurality of buttons 506. The third user input identifies an element from the video game (e.g., a game element) displayed on the television screen 523. The control device 503 sends a third control signal to the set top box 531 via the Internet 513. In response to the third control signal, the set top box 531 identifies the selected element and learns that any subsequent user input is meant for maneuvering the selected element of the video game. The video game may, for example, be a game of driving a car through alleys, and the selected element may be the car. The control device 503 may be provided with a list of a plurality of elements (*e.g*., selectable game elements) and the third user input may be based on the list. The control device 503 displays the list on the control device screen 505 to guide the user to enter the third user input.

The control device 503 subsequently receives a fourth user input from the user, who visually interacts with the television screen 523. The fourth user input, for example, identifies a turn around command. The control device 503 sends a fourth control signal to the set top box 531 via the Internet 513 and a processing unit 535 of the set top box 531, in response, processes video displayed on the television screen 523. Such processing performed by the processing unit 535 makes the car (e.g., the selected element) turn around and move in the opposite direction. The user (the player) now witnesses the car moving in the opposite direction on the television screen 523. In some embodiments, because of limited storage capability of the storage unit 536, the set top box 531, instead of storing the first copy of the video game in the storage unit 536, stores a plurality of successive frames of the video game in the storage unit 536. The set top box 531 receives and stores a next frame in the storage unit 536 as soon as the set top box 531 sends the first of the successive frames of the video game to the television 521 for display. This method saves the general requirement of large storage units in the set top box 531 and accommodates large network (*e.g*., Internet network) delays.

For example, a score may be associated with the video game of driving the car through alleys. The control device 503 receives a supplemental video (*e.g*., supplemental video information) associated with the video game, via the Internet 513, from the set top box 531. The supplemental video in this case is the score. The control device 503 displays the score on the control device screen 505. The score changes with each user input that causes the car (the selected element) to move. The user enters successive inputs based on the score (the supplemental video) displayed on the control device screen 505.

The television screen 523 may, for example, support video information in HDTV (High Definition Television) format only. The control device screen 505 may, for example, support the video information in QVGA (Quarter Video Graphics Array) format only. The selected video game and the supplemental video may be in HDTV format. The set top box 531 sends the supplemental video to the control device 503 via a transcoding server 571 that is communicatively coupled to the Internet 513. The transcoding server 571 receives the supplemental video in HDTV format, applies transcoding and generates the supplemental video in QVGA format. Next, the transcoding server 571 sends the supplemental video in QVGA format to the control device 503 via the Internet 513. Transcoding may be performed to save bandwidth, among other reasons.

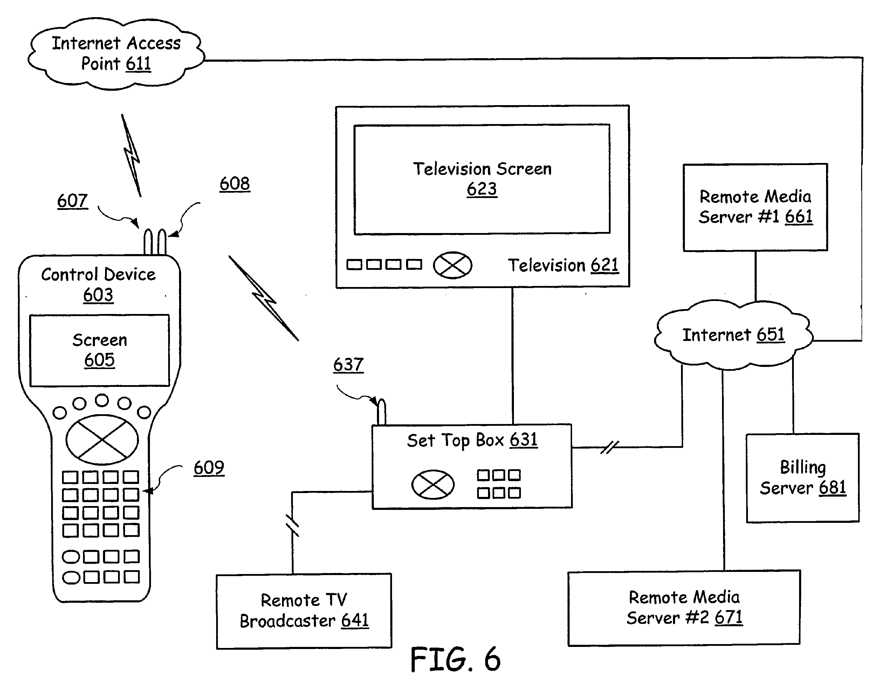

FIG. 6 is a schematic block diagram illustrating an embodiment of the control device 503 of FIG. 5 further supporting a dedicated interaction path with the set top box 631. The control device 603 has a first wireless interface 607 and a second wireless interface 608. The control device 603 communicates with the set top box 631 via the second wireless interface 608. The set top box 631 comprises a third wireless interface 637 via which the set top box 631 interacts with the control device 603. The set top box 631 is coupled to a television 621 using a wired link. The set top box 631 is also coupled to a television broadcaster 641. The set top box 631 may, for example, be a satellite set top box or a cable set top box depending on the type of the television broadcaster 641. The control device 603 controls selection and delivery of a plurality of television programs from the television broadcaster 641 to the television 621 via the set top box 631. A user uses the plurality of buttons 609 (or other input devices) of the control device 603 to enter a selection of a television program. In response to the user selection, the control device 603 sends a control signal to the set top box 631 via the second wireless interface 608. The set top box 631 receives the control signal via the third wireless interface 637. Next the set top box 631 retrieves the television program corresponding to the user selection from the television broadcaster 641 and forwards the received television program to the television 621 via the wired link. The television subsequently displays video portion of the television program on a television screen 623 and plays audio portion of the television program on a television speaker. Thus the user watches the selected television program on the television 621 by using the control device 603.

The control device 603 is coupled to the Internet 651 via an Internet access point 611 and the first wireless interface 607. The control device 603 is communicatively coupled to a first remote media server 661, a second remote media server 671 and a billing server 681 via the Internet 651. The first remote media server 661 comprises a first plurality of media elements and the second remote media server 671 comprises a second plurality of media elements. The control device 603 may direct the set top box 631 to retrieve the first plurality of media elements and the second plurality of media elements via the Internet 651 for display on the television screen 623.

For example and without limitation, the first remote media server 661 is a video game box. The first plurality of media elements comprise a plurality of video games stored in a memory of the video game box 661. The second remote media server 671 is a movie server. The second plurality of media elements comprise a plurality of movies stored in the movie server 671. The control device 603 controls selection and delivery of the plurality of video games and the plurality of movies to the television 621 via the Internet 651 and/or the set top box 631. The control device 603 also accepts a variety of media alteration requests from the user via the plurality of buttons 609 and triggers an alteration in a video and/or audio portion of the media element as per the media alteration request. The control device 603 may display a supplemental video (e.g., supplemental video information) on the control device screen 605, and the media alteration requests from the user may be based on the supplemental video. The control device 603 further directs display of the altered media element on the television screen 623.

In this exemplary case, the control device 603 receives a first user input entered by the user using the plurality of buttons 609. The first user input identifies a video game from the plurality of video games stored in the memory of the video game box 661. In response to the first user input, the control device 603 sends a first control signal to the set top box 631 via the second wireless interface 608 directing the set top box 631 to receive the selected video game from the video game box 661 via the Internet 651. The control device 603 further directs the set top box 631 to forward the received video game to the television 621 via the wired link.

The set top box 631, in response to the first control signal, requests the video game box 661 for the selected video game. The video game box 661 sends an image of a plurality of questions (exemplary supplemental video information) to the control device 603 via the Internet 651 and the Internet access point 611. The control device 603 receives the image via the first wireless interface 607 and displays the image on the control device screen 605, thus revealing the plurality of questions to the user. The user may enter a plurality of answers using the plurality of buttons 609. The control device 603 conveys the plurality of answers to the video game box 661 via the first wireless interface 607 and the Internet 651. The video game box 661 may send a second plurality of questions (exemplary supplemental video information) to the control device 603 and subsequently receive a response from the control device 603. The question/answer interaction between the control device 603 and the video game box 661 may, for example, be utilized for credential verification and media rights management, among other things.

The video game box 661 grants access to the selected video game based on the question/answer interaction. If access is granted, the set top box 631 receives the selected video game from the video game box 661 via the Internet 651 and forwards the received video game to the television 621 via the wired link. The television 621 displays a video portion of the video game on the television screen 623 and plays an audio portion of the video game on the television speaker. If access is not granted, then the control device 603 displays a failure message on the control device screen 605.

The control device 603 may further receive a second user input. The second user input identifies a movement to be applied to an element of the video game (*i.e.,* a video game element). The video game, for example, is a game of fighting between a game hero and an opponent, and the second user input requests for the game hero (the element of the video game) to jump (the movement). The control device 603 sends a second control signal to the set top box 631 via the second wireless interface 608. The set top box 631 in turn requests the video game box 661 to apply a jumping movement to the game hero. A processing unit of the video game box 661 alters the video game by applying the jumping movement to the game hero and sends the altered video game to the set top box 631 via the Internet 651. The set top box 631 forwards the altered video game to the television 621 for display. The game of fighting between the game hero and the opponent then appears on the television screen 623 with the game hero seen as jumping.

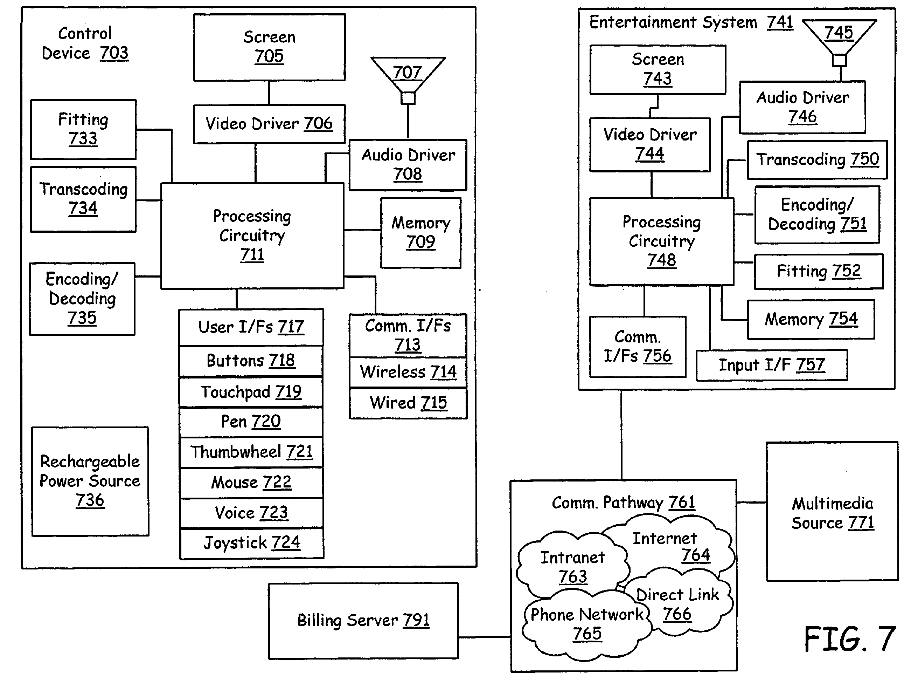

FIG. 7 is a schematic block diagram illustrating communication pathways between a multimedia source 771, an entertainment system 741, a billing server 791 and a control device 703 that controls display of a selected multimedia element on the entertainment system 741. A plurality of multimedia elements are available with the multimedia source 771. The multimedia source 771 may be, for example, one or a combination of an online music store, a storage unit of a PVR system, a DVD, a VCD and a movie server. In this example, the plurality of multimedia elements may be recorded television programs, music videos and audios, personal audio and video recordings and movies. The multimedia source 771 has a communication interface via which the multimedia source 771 is communicatively coupled to the communication pathway 761. The communication pathway 761 may, for example, comprise characteristics of a direct link 766, Internet 764, Intranet 763, phone network 765, etc.

The entertainment system 741 is typically, for example, a television and a set top box, a home theatre system, a PVR system and a video game system. The entertainment system 741 comprises a screen 743, a speaker 745, a memory 754 and processing circuitry 748. The control device 703 comprises a screen 705, a speaker 707, a processing circuitry 711, a transcoding unit 734, an encoding/decoding unit 735, a fitting unit 733, a memory 709, a user input interface 717, a communication interface 713 and a rechargeable battery 736. The user input interface 717 of the control device 703 may, for example, be a plurality of buttons 718, a touchpad 719, a pen 720, a thumbwheel 721, a mouse 722, a voice-based interface 723 and a joystick 724. A user uses the control device 703 to control video and audio settings of the entertainment system 741. The user may also select which of the plurality of multimedia elements from the multimedia source 771 to be displayed on the screen 743 of the entertainment system 741 by entering a first choice via the user input interface 717 of the control device 703. A first plurality of functionalities, for example and without limitation, swapping of channels, channel scanning and PIP (picture-in-picture) functionalities may be performed for the entertainment system 741 using the user input interface 717 of the control device 703. The user may affect a video portion and/or an audio portion of a multimedia element currently being played by the entertainment system 741 by entering a second choice via the user input interface 717 of the control device 703. A second plurality of functionalities, for example and without limitation, applying a movement to an element selected from the video portion of the multimedia element, selectively displaying a portion of the multimedia element, displaying a video portion of the multimedia element at a slower rate, etc. may be performed to alter the currently displayed multimedia element.

For example, the entertainment system 741 is a television and a set top box, and the multimedia source 771 is an online music store. The screen 743 and the speaker 745 of the entertainment system 741 refer to a television screen and a television speaker respectively. The control device 703 receives a music selection and directs the set top box of the entertainment system 741 to receive a music video corresponding to the music selection from the online music store 771. The set top box of the entertainment system 741 receives the music video and displays a video portion and plays an audio portion of the music video on the television screen 743 and on the television speaker 745, respectively. The set top box may be directed by the control device 703 to additionally receive a plurality of music videos other than the selected music video from the online music store 771. The set top box of the entertainment system 741 receives the plurality of music videos from the online music store 771 and stores the videos in the memory 754. A subsequent request from the user for a second music video from the plurality of music videos directs the set top box to retrieve the second music video from the memory 754. This method of storing the plurality of music videos in the memory 754 in anticipation of network delay may save time, among other advantages. In this exemplary case, any subsequent selection entered by the user via the user input interface 717 of the control device 703 may change the music video currently displayed on the entertainment system 741.

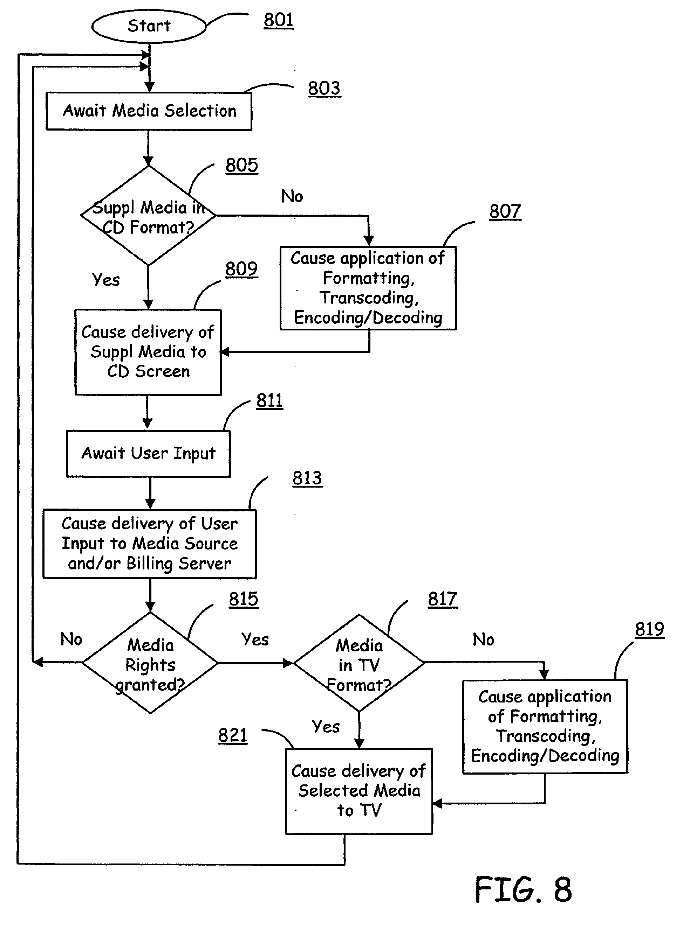

FIG. 8 is a flowchart illustrating a method of performing purchase transaction management by a control device using the control device screen for a video displayed on a television screen. The method may begin at block (or step) 801. The control device then waits for a media selection from a user as shown at a next block 803. The control device receives the media selection from the user in block 803. The media selection identifies a media element comprising at least a video portion. The media element may contain an audio portion additionally. The selected media element resides in a media source. The selected media element may, for example, be a pay media. In such a case, the control device is expected to purchase media rights for the selected media element. If the selected media element is a free-to-use media element, then the control device may be expected to verify credentials. Supplemental media information is available with the media source. The supplemental media information guides the user to enter a plurality of choices using the control device. The plurality of choices entered by the user enable a billing server and the media source to verify credentials of the user and to sell media rights of the selected media element to the user.

A screen of the control device may support media (video) in a particular format, also called control device format. The control device, in block 805, checks if the supplemental media information available with the media source is in the control device format. If not, then the control device causes application of transcoding, formatting and/or encoding to the supplemental media information to convert the supplemental media information to control device format, as shown in block 807. The control device may, for example, comprise a transcoding unit. Then the control device receives the supplemental media information and the transcoding unit of the control device applies transcoding to the supplemental media information. The control device might not be able to perform the transcoding because of, for example, limited processing capability, limited power or limited memory. In that case, the control device may direct a transcoding server to perform the transcoding functionality at block 807. The control device directs the supplemental media information to be delivered to the transcoding server. In a next block 809 the control device receives the supplemental media information, now in control device format and displays the supplemental media information on the control device screen. If the transcoding unit of the control device performs the transcoding, then the control device directs delivery of the supplemental media information from the transcoding unit to the control device screen in block 809. If the transcoding server performs the transcoding, then the control device receives the supplemental media information from the transcoding server in block 809. If, in block 805, the control device determines that the supplemental media information is in control device format then the control device receives the supplemental media information from the media source and displays the supplemental media information on the control device screen in block 809.

The control device waits for a user input as shown in block 811. Typical supplemental media information displayed on the control device screen may, for example, be a data sheet where the user is prompted to enter a username, a password, an identity of the control device and credit card details. The control device receives the user input in block 811 and directs delivery of the user input (the username, the password, the identity of the control device, the credit card details, etc.) to the billing server and/or the media source. The control device then awaits media rights for the selected media element in a next block 813.

If the billing server and/or the media source does not grant access to the selected media element based on the user input then the operational flow of the control device returns to step 803, where the control device awaits a second media selection. If the control device receives permission to access the selected media element, then operation of the control device flows to block 817. A television screen may support media (video) in a particular format, also called television format. The control device, in block 817, checks if the selected media element available with the media source is in the television format. If not, then the control device causes application of transcoding, formatting and/or encoding to the selected media element to convert the selected media element to control television format as shown in block 819. A transcoding server may, for example, be used in block 819. In that case, the control device directs delivery of the selected media element from the media source to the transcoding server. The transcoding server changes the selected media element to television format. The control device directs delivery of the selected media element, now in television format, to the television for display in a next block 821. If the control device, in block 817, determines that the selected media element is already in the television format, then the control device triggers delivery of the selected media element from the media source to the television in block 821. Operational flow of the control device then returns to block 803, where the control device waits for a second media selection.

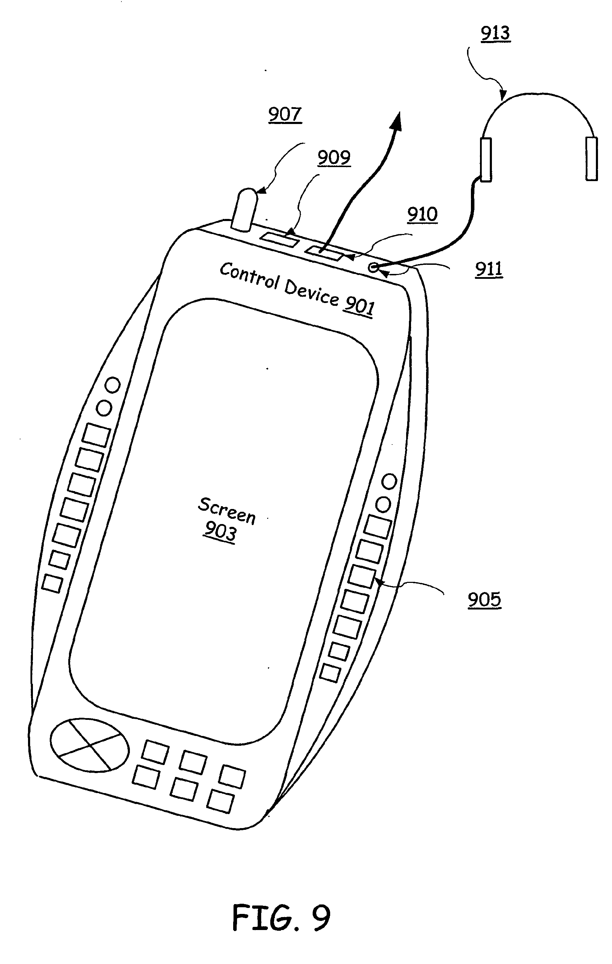

FIG. 9 illustrates an embodiment of the control device 703 of FIG. 7 wherein the control device 901 comprises a touch sensitive screen 903, the screen 903 displaying user interaction information (exemplary supplemental information) corresponding to multimedia information displayed on the entertainment system 741. The control device 901 comprises a variety of buttons 905. The variety of buttons 905 and the touch sensitive screen 903 are user interface components of the control device 901. The user interaction information corresponding to the multimedia information displayed on the entertainment system 741 may be, for example, a layout of a plurality of icons, a plurality of drop down menus, a plurality of movements and a mapping between the variety of buttons 905 and the plurality of movements, etc. The layout reveals to a user the plurality of movements that may be applied to an element, also called object, from the multimedia information and a plurality of buttons from the variety of buttons 905 that are associated with the plurality of movements. For example, the mapping between the variety of buttons 905 and the plurality of movements may reveal that a first of the variety of buttons 905 corresponds to a running movement. Thus, on selection of the first of the variety of buttons 905, the control device 901 causes the element (the object) from the multimedia information to run. The multimedia information displayed on the entertainment system 741 may, for example, be a video showing a man walking. The element (or object) may be the man. On selection of the first of the variety of buttons 905, the man in the video appears to be running.

The plurality of icons displayed on the screen 903 may comprise an icon that corresponds to the running movement. The user may touch a portion of the screen 903 that displays the icon that corresponds to the running movement and the control device 901, in response, causes the man walking in the video to run. The variety of buttons 905 and the touch sensitive screen 903 may be used to govern the plurality of movements and/or actions of the element from the video (the multimedia information). The user interaction information displayed on the screen 905 may give a choice to the user to select the element from a plurality of elements comprising the multimedia information (the video).

The control device 901 is communicatively coupled to a plurality of media sources via a wireless communication interface 907 and/or a wired communication interface 910. The multimedia information displayed on the entertainment system 741 is provided by one of the plurality of media sources. The control device 901 may be coupled to the plurality of media sources directly or indirectly. The control device 901 comprises an interface 909 into which a storage device may be plugged. The user may choose to store the user interaction information displayed on the control device screen 903 in the storage device. The control device 901 comprises an audio port 911. The user interaction information may comprise an audio portion. The audio portion of the user interaction information received by the control device 901 may be heard in a speaker 913, if the speaker 913 is inserted into the audio port 911 of the control device 901.

As one of average skill in the art will appreciate, the term "communicatively coupled", as may be used herein, includes wireless and wired, direct coupling and indirect coupling via another component, element, circuit, or module. As one of average skill in the art will also appreciate, inferred coupling (*i.e.,* where one element is coupled to another element by inference) includes wireless and wired, direct and indirect coupling between two elements in the same manner as "communicatively coupled."

Various aspects of the present invention have also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

Various aspects of the present invention have additionally been described above with the aid of functional building blocks illustrating the performance of certain significant functions. The boundaries of these functional building blocks and relationships between various functional building blocks have been arbitrarily defined for convenience of description. Alternate boundaries or relationships could be defined as long as the certain significant functions are appropriately performed. Such alternate boundaries or relationships are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the scope of various aspects of the present invention is not limited to such embodiments. It will be obvious to one of average skill in the art that various changes and modifications may be practiced within the spirit and scope of the invention, as limited only by the scope of the appended claims.

## Claims

1. A home entertainment system that receives video information from a plurality of video sources, the home entertainment system comprising:
a television comprising a first screen that displays video information received from at least one of the plurality of video sources; and
a remote control device comprising a second screen that displays supplemental video information corresponding to the video information displayed on the first screen.

2. The home entertainment system of claim 1, wherein the remote control device further comprises a user input interface adapted to receive a video selection, and the displayed video information corresponds to the video selection.

3. The home entertainment system of claim 2, wherein:
the user input interface of the remote control device is adapted to receive a user selection; and
the remote control device is adapted to, in response to the user selection, send a control signal triggering an alteration in the video information and directing display of the altered video information on the first screen.

4. The home entertainment system of claim 3, wherein the user selection is based on the supplemental video information displayed on the second screen.

5. The home entertainment system of claim 3, wherein the user selection causes the display of second video information on the first screen and corresponding second supplemental video information on the second screen.

6. A control device for use with a television having a first video display that displays media information, the control device comprising:
a second video display;
at least one module adapted to display, on the second video display, a list of a plurality of elements of the media information;
a user input interface adapted to receive an element selection, where the element selection identifies an element from the displayed list of the plurality of elements; and
a communication interface;
wherein the at least one module is further adapted to send a control signal via the communication interface, where the control signal is adapted to direct execution of an action by the selected element.

7. The control device of claim 6, wherein the at least one module is adapted to send the control signal to set top box circuitry.

8. The control device of claim 6, wherein the at least one module is adapted to receive the list of the plurality of elements from a media source that provides the media information to the television.

9. A control device for interacting with a video source that provides a video stream to a television system, the control device comprising:
a communication interface adapted to receive user interaction information from the video source, where the user interaction information identifies a plurality of actions that may be applied on the video stream;
a user interface adapted to:
present the user interaction information to a user; and
receive a user input that identifies an action from the plurality of actions; and
at least one module adapted to transmit a control signal, where the control signal is adapted to trigger application of the identified action on the video stream.

10. The control device of claim 9, wherein the user interface comprises a plurality of buttons, and the user interaction information comprises a mapping between the plurality of buttons and the plurality of actions.
